Europäisches Patentamt

European Patent Office

Office européen des brevets

(11) Veröffentlichungsnummer: **0 480 345 A1**

(12) **EUROPÄISCHE PATENTANMELDUNG**

(21) Anmeldenummer: **91117034.8**

(22) Anmeldetag: **04.10.91**

(51) Int. Cl.5: **H02K 49/04**

(30) Priorität: **04.10.90 DE 4031269**

(43) Veröffentlichungstag der Anmeldung:
**15.04.92 Patentblatt 92/16**

(84) Benannte Vertragsstaaten:
**AT BE DE ES FR IT NL**

(71) Anmelder: **PENTAR S.A.**
**Autovia de Logrono Km. 13.700, Poligono S.**
**Ildefonso, Nave 1**
**E-50180 Utebo - Zaragoza(ES)**

(72) Erfinder: **Taules, Carlos Maria**
**Calle La Paz, 17**
**E-31579 Carcar - Navarra(ES)**

(74) Vertreter: **Müller, Eckhard, Dr.**
**Eifelstrasse 14**
**W-6257 Hünfelden 2(DE)**

(54) **Wirbelstrombremse.**

(57) Es handelt sich um eine elektrische Wirbelstrombremse (1) mit im Magnetfeld einer an einem Spulenkörper (2) gehaltenen Spulenanordnung (3) drehenden Rotoren (4, 5). Um bei geringer Wärmeentwicklung und hohen Drehzahlen eine optimale Ausnutzung der elektrischen Energie für die Felderregung zur Erzeugung der Bremswirkung zu erreichen, weist der Spulenkörper (2) zwei i. w. konzentrisch zur Rotorachse (A-A) und mit radialem Abstand zueinander angeordnete ringförmige Pole (6-9) mit entgegengesetzter Feldrichtung auf, vor welchen die mit radial nach außen verlaufenden Zähnen (14) versehenen Rotoren (4, 5) mit geringem Abstand drehen. Der Spulenkörper (2) ist vorzugsweise von zwei konzentrischen Ringen (10, 11) aus magnetisch weichem Werkstoff gebildet, welche unter Bildung der Polpaare (6-9) auf beiden Stirnseiten der Wirbelstrombremse (1) die als ringförmige Magnetspule (12) ausgeführte Spulenanordnung (3) zwischen sich aufnehmen.

Fig. 1

Die Erfindung bezieht sich auf eine elektrische Wirbelstrombremse mit mindestens einem im Magnetfeld einer an einem Spulenkörper gehaltenen Spulenanordnung drehenden Rotor.

Bekannte elektrische Wirbelstrombremsen, wie sie bspw. als Zusatzbremseinrichtungen für Lastkraftwagen und Omnibusse eingesetzt werden und in der DE 39 08 234 A1 beschrieben sind, weisen mehrere konzentrisch um eine Zwischenwelle angeordnete Magnetspulen auf, vor deren Pole auf beiden Stirnseiten des Spulenpakets jeweils mit geringem Luftspalt eine Rotorscheibe dreht. Die Zwischenwelle ist zwischen Getriebe und Antriebsache im Antriebswellenstrang des Fahrzeuges eingebaut, während das Spulenpaket mit seinem Spulenkörper feststehend am Rahmen oder Getriebe des Fahrzeuges gehalten ist. Die Magnetspulen sind so geschaltet, daß bei Stromerregung an dem auf jeweils gleichen Stirnseiten des Spulenpakets gelegenen Polen magnetische Felder mit alternierenden Feldrichtungen erzeugt werden. Beim Bremsvorgang werden in den sich in den Magnetfeldern drehenden Rotorscheiben Wirbelströme induziert, welche entsprechend der Lenzschen Regel ihrer Ursache entgegenzuwirken und damit die Rotordrehung zu hemmen suchen. Das auf die Rotorscheiben ausgeübte Bremsmoment überträgt sich auf den Antriebswellenstrang, welcher seinerseits abgebremst wird und zu einer Verzögerung des Fahrzeuges führt. Zur Erhöhung des magnetischen Flusses sind an den Polen der Magnetspulen Eisenplatten angebracht, es ist aber auch bekannt, das Erregerfeld mittels Polklauen aufzubauen. Diese Ausführungen einer Wirbelstrombremse mit alternierender Feldrichtung der Pole bewirkt eine fortwährende Ummagnetisierung der einzelnen Segmente der Rotorscheiben. Bei den für Lastkraftwagen eingesetzten Wirbelstrombremsen mit üblicherweise acht Magnetpolen je Stirnseite des Spulenpakets ergibt sich bei einer Drehzahl der in den Antriebswellenstrang des Fahrzeuges integrierten Zwischenwelle von 2000 Umdrehungen pro Minute eine Ummagnetisierungs-Frequenz von etwa $f = 267$ Hz, so daß die für die Ummagnetisierung eines Rotorsegmentes verbleibende Zeit nur 0,00375 s beträgt. Um den hohen Temperaturen während des Betriebes standzuhalten, bestehen die Rotorscheiben aus magnetisch relativ harten Werkstoffen, welche eine hohe Koerzitivfeldstärke aufweisen. Dies führt zu erheblichen magnetischen Verlusten, welche proportional zu der oben angegebenen Ummagnetisierungsfrequenz f ansteigen. Die Ummagnetisierungsverluste erhöhen den Wärmeinhalt des Magnetstoffes und damit die Temperatur der Rotoren noch zusätzlich zu den durch die Wirbelströme selbst bedingten Verlustleistungen. Die Folge ist, daß die Rotorscheiben, insbesondere bei längerem Vollastbetrieb, überhitzen, was zu einer Vergrößerung der Luftabstände zwischen den Polplatten der Magnetspulen und den Rotorscheiben führt, und sich eine Verminderung der Bremsleistung einstellt. Ein weiterer Nachteil der bekannten Wirbelstrombremsen ist, daß sich durch die ständige Ummagnetisierung der Rotorsegmente auch die Richtung der Spannung, welche die induzierten Ströme in den Rotorsegmenten erzeugt, fortwährend ändert. Dieses Wechselspannungen geben Veranlassung zu einem Skin-Effekt, was zu einer Erhöhung des Ohmschen Widerstandes der Rotorscheiben führt und eine weitere Temperaturerhöhung zur Folge hat. Der induzierte Strom wird dabei an die den Polen zugewandte Oberfläche der Rotorscheibe verdrängt, wogegen der hintere, entferntere Teil, an welchem häufig Kühlrippen vorgesehen sind, nicht ausgenutzt wird. Hierdurch stellt sich eine ungleichmäßige und ungünstige Temperaturentwicklung ein mit zu den Kühlrippen abnehmender Temperatur.

Die gleichen Nachteile treten bei Einsatz dieser Wirbelstrombremsen für Motorenprüfstände auf. Bei der bspw. in der DE 90 00 789 U1 beschriebenen Meßvorrichtung ist der die Magnetspulen haltende Spulenkörper drehbar auf einer zum Anschluß an eine motor- oder getriebeseitige Transmissionswelle ausgebildeten Welle gelagert, welche zwei im geringen Abstand zu den Polen der Magnetspulen angeordnete Rotorscheiben aufweist. Ist der zu prüfende Motor mit seiner Transmissionswelle an die Anschlußwelle angekuppelt und sind die Magnetspulen erregt, so führt der Spulenkörper mit Magnetspulen zunächst eine Drehbewegung in Umlaufrichtung der Anschlußwelle aus, bis er mit einem Hebelarm an einem ortsfest am Rahmen angeordneten Anschlag anliegt. Aufgrund der Drehbewegung im Magnetfeld werden in den Rotorscheiben Wirbelströme induziert, wodurch die Drehbewegung der Rotorscheiben gehemmt ist. Hierdurch wird ein Bremsmoment in die Anschlußwelle eingeleitet und der Motor belastet. Aufgrund des Drehimpulsenhaltungssatzes wird dabei auf den Spulenkörper mit den Magnetspulen ein dem Antriebsmoment des Motors entgegengesetztes Drehmoment D ausgeübt, welches sich durch Messung der vom Spulenkörper über den Hebelarm auf den Anschlag ausgeübten Kraft F und durch die Länge l des Hebelarms aus der Beziehung $D = F \times l$ ergibt. Die Hebelarmlänge entspricht dabei dem Abstand zwischen der Achse der Anschlußwelle und dem Anlagepunkt des Hebelarms am Anschlag. Mit der Formel $P = D \times \omega$ für die Leistung eines rotierenden Körpers läßt sich dann die Nutzleistung des jeweiligen Motors bei bekannter Umlaufgeschwindigkeit ermitteln, wobei durch Verändern des Erregerstroms unterschiedliche Motorbelastungen eingestellt werden können. Zu den genannten Nachteilen kommt bei derartigen Leistungsprüfständen hinzu, daß sich das volle Gewicht des Spulenkörpers mit Magnetspulen von immerhin 150 bis 200 kg über die Lagerung der Wirbelstrombremse auf die Anschlußwelle niederschlägt, wodurch eine statische Durchbiegung entsteht. Dabei wirkt die Anschlußwelle wie eine biegeelastische Feder, welche die Massen von Rotorscheiben und Spulenkörper mit Spulen trägt. Da infolge von Fertigungstoleranzen der Schwerpunkt der umlaufenden Massen nicht mit dem theoretischen Wert zusammenfällt, können Resonanzen auftreten, wobei die biegekritische Drehzahl bei großen statischen Massen schneller erreicht wird. Insgesamt wird das System hierdurch unruhig und die Messungen äußerst ungenau. Ein weiterer Nachteil der bekannten Meßvorrichtungen ist, daß die für die Drehbewegung des Spulenkörpers auf der Anschlußwelle vorgesehenen Lager wegen der abzustützenden Massen relativ groß ausgeführt sein müssen, wodurch die für die Messung zugänglichen Drehzahlen nach oben begrenzt sind. Die Schmierung der relativ groß dimensionierten Lager erfolgt mittels Fett, das eine relativ niedrige Arbeitstemperatur aufweist und wiederum die thermische Dauerfestigkeit des Systems begrenzt mit der Folge, daß die Betriebeintervalle der Meßvorrichtung äußerst kurz gehalten werden müssen.

Davon ausgehend liegt der Erfindung die Aufgabe zugrunde, eine Wirbelstrombremse der eingangs genannten Art dahingehend weiterzuentwikkeln, daß bei Minimierung der magnetischen Verlustleistung, Reduzierung der thermischen Belastung sowie geringem Gewicht eine optimale Bremswirkung erreicht ist und ein Einsatz insbesondere auch bei Motorenprüfständen ermöglicht ist.

Zur Lösung dieser Aufgabe ist es nach der Erfindung i. w. vorgesehen, daß der Spulenkörper zwei i. w. konzentrisch zur Rotorachse und mit radialem Abstand zueinander angeordnete ringförmige Pole mit entgegengesetzter Feldrichtung aufweist und daß der Rotor auf seiner den ringförmigen Polen zugewandten Seite mit radial verlaufenden Rippen, Zähnen o. dgl. Vorsprüngen versehen ist.

Bei der erfindungsgemäßen Wirbelstrombremse wird das Bremsmoment dadurch erzeugt, daß sich bei Stromerregung der Spulenanordnung je nach dem eingestellten Wert des Gleichstromes ein entsprechend homogenes Magnetfeld bildet, dessen Feldlinien senkrecht zu den Zahnflächen an den den Polen zugewandten Stirnflächen des mindestens einen Rotors verlaufen. Aufgrund der Drehbewegung des Rotors durch das magnetische Induktionsfeld enstehen als Folge der rotierenden Rippen, Zähne o. dgl. Vorsprünge im Bereich der Stirnseite der ringförmigen Pole bzw. des Stators Wirbelströme, die ihrerseits Magnetfelder aufbauen. Diese Magnetfelder wirken ihrer Ursache, der Drehbewegung, entgegen. Im Falle einer ortsfesten Spulenanordnung, wie bspw. bei Einsatz der Wirbelstrombremse als Zusatzbremseinrichtung bei Fahrzeugen, versuchen die Wirbelströme den Rotor zu bremsen und bilden mit dem Induktionsfeld ein Bremsmoment. Ist dagegen die Spulenanordnung drehbar gelagert, wie bei Leistungsbremsen zur Messung des Drehmomentes und/oder der Leistung von Motoren, ist die Spulenanordnung bestrebt, dem Rotor in seiner Drehbewegung zu folgen, wobei sich dann die Spulenanordnung über einen Hebel auf einer Kraftmeßeinrichtung abstützt und das hierbei auftretende Reaktionsmoment als Krafteinheit zur Anzeige gebracht wird. Die erfindungsgemäße Wirbelstrombremse zeichnet sich durch ein günstiges Verhältnis zwischen der zur Erregung der Magnetspulen erforderlichen elektrischen Energie und des erzielten Bremsmomentes aus. Durch die Ausbildung des Spulenkörpers mit zwei konzentrisch zur Rotorachse und mit radialem Abstand zueinander angeordneten ringförmigen Polen mit entgegengesetzter Feldrichtung ergibt sich eine konstante Magnetisierung der Rotorscheiben, ohne daß diese ihre Polung bei der Drehbewegung ändern. Ummagnetisierungsverluste wie bei den bekannten Wirbelstrombremsen treten daher nicht auf. Als Folge der rotierenden Zähne des Rotors entstehen Wirbelströme über den gesamten Querschnitt der stirnseitigen Statorflächen. Gegenüber den bekannten Wirbelstrombremsen ergibt sich hierdurch ein geringerer Ohmscher Widerstand mit der Folge, daß die das Bremsmoment erzeugenden Wirbelströme größer werden. Mit kleiner werdendem Ohmschen Widerstand nimmt aber auch die Wärmeentwicklung der Wirbelstrombremse ab, so daß höhere Drehzahlen und damit auch höhere Bremsleistungen erreichbar sind. Da die Wirbelströme vornehmlich an den Statorstirnflächen und nicht am Rotor erzeugt werden, ist die thermische Belastung des Rotors wesentlich geringer, so daß auch bei längerem Vollastbetrieb der Luftspalt zwischen Rotor und Stator und damit auch die eingestellte Bremsleistung i. w. konstant bleibt. Desgleichen können wegen der geringen thermischen Beanspruchung im Vergleich zu den bekannten Wirbelstrombremsen die Rotoren leichter ausgeführt sein. Auch bedarf es in herstellungstechnisch vorteilhafter Weise keiner besonderen Legierungen für das Rotormaterial, es kann bspw. auf übliches Gußmaterial, wie Stahlguß, zurückgegriffen werden. Insgesamt ergibt sich eine gleichmäßigere Temperaturverteilung mit geringerer Verformung der Rotorscheiben, so daß die Bremswirkung definiert einstellbar ist.

Nach einer ersten besonderen Ausführungsform der Erfindung ist es vorgesehen, daß der Spulenkörper zwei konzentrische Ringe aufweist, welche unter Bildung des mindestens einen Polpaares die Spulenanordnung zwischen sich aufnehmen. Diese konstruktiv und herstellungstechnisch günstige Ausführung ermöglicht eine Konzentrierung der Eisenmassen, wodurch die Pole näher aneinander zu liegen kommen und daher auch insoweit günstigere Werkstoffe für die Rotorscheiben ausgewählt werden können. Gleichzeitig läßt sich der effektive Radius der Wirbelstrombremse vergrößern und ihr Gewicht reduzieren.

Zur Erreichung einer höheren Bremsleistung ist es nach der Erfindung auch möglich, daß an beiden Stirnseiten der Ringe jeweils ein Polpaar mit zugeordnetem Rotor gebildet ist.

Zur Erhöhung der magnetischen Kraftflußdichte und damit der Bremswirkung ist es nach einem weiteren Vorschlag der Erfindung vorgesehen, daß der Spulenkörper bzw. seine Ringe aus magnetisch weichem Material, bspw. Eisen, besteht bzw. bestehen. Die Verwendung von magnetisch weichem Material ist dadurch möglich, daß die erfindungsgemäße Wirbelstrombremse eine relativ geringe Wärmeentwicklung aufweist, so daß es im Betrieb auch bei extremer Belastung zu keinen nennenswerten Änderungen des Luftspaltes zwischen den ringförmigen Polen und den Rotorscheiben kommt. Da magnetisch weiche Werkstoffe eine hohe Permeabilität aufweisen, ergibt sich eine nochmalige Verbesserung des Wirkungsgrades zwischen der von der Spulenanordnung erzeugten Feldstärke und der erreichten Bremswirkung.

Um eine möglichst kompakte Baugröße zu erreichen, empfiehlt es sich, daß die Spulenanordnung mindestens eine zylindrische Magnetspule aufweist.

Damit es zu keiner unmittelbaren Rückwirkung der von den Induktionsströmen in den Rotoren ausgehenden Magnetfelder auf die Erregerspule kommt, ist es nach einem Vorschlag der Erfindung vorgesehen, die ringförmigen Pole in axialer Richtung gegenüber der Spulenanordnung vorstehen.

Nach einer Ausführungsform der Erfindung ist der radial innere Ring in Längsrichtung geteilt ausgebildet, so daß sich die Spulenanordnung in montagetechnisch besonders einfacher Weise an dem Spulenkörper fixieren läßt.

In die gleiche Richtung zielt die erfindungsgemäße Maßnahme, wonach die Ringe mittels Schraubverbindungen aus nichtmagnetischem Werkstoff zusammen gehalten sind.

Um die aufgrund der Wirbelströme im Bereich der Statorstirnflächen auftretende Wärme abzuführen, ist es nach einer Ausführungsform der Erfindung vorgesehen, daß die Ringe mit Kühlöffnungen, Kühlrippen o. dgl. Einrichtungen versehen sind.

Nach einer weiteren Ausgestaltung der Erfindung sind die den ringförmigen Polen zugewandten Rippen, Zähne o. dgl. Vorsprünge des mindestens einen Rotors an einem radial äußeren Ringelement gebildet, welches mittels, als Ventilationsflügel ausgebildeten Armen von einem mittleren Platten- oder Nabenteil gehalten ist, das mit einer aus der Spulenanordnung austretenden Anschlußwelle befestigbar ist. Durch die Ausführung der das radial äußere Ringelement des Rotors haltenden Arme als Ventilationsflügel wird eine Kühlung im Bereich der Stirnfläche des Stators, in welchem die Wirbelströme entstehen, bzw. der Pole der beiden konzentrischen Ringe erreicht.

Alternativ oder zusätzlich kann zwischen dem die Rippen, Zähne o. dgl. Vorsprünge aufweisenden Ringelement und dem mit der Anschlußwelle befestigbaren Platten- oder Nabenteil eine, vorzugsweise elektrische Gebläseeinrichtung vorgesehen sein.

Grundsätzlich können die Rotoren aus Stahlguß oder Gußeisen bestehen. Die im Vergleich zu den bekannten Wirbelstrombremsen geringere thermische Beanspruchung der Rotoren ermöglicht gemäß einer besonderen Ausführungsform der Erfindung eine vorteilhafte Leichtbauweise vorzusehen, wobei der Rotor aus Leichtmetall und die Rippen, Zähne o. dgl. Vorsprünge ggf. mit dem äußeren Ringelement aus einem magnetischen, vorzugsweise aus einem weichmagnetischen Werkstoff bestehen.

Im Rahmen der Erfindung liegt es auch, daß die elektrische Wirbelstrombremse als Bremselement einer Vorrichtung zur Messung des Drehmomentes bzw. der Leistung von Motoren ausgebildet ist. Hierzu eignet sich die erfindungsgemäße Wirbelstrombremse in besonderem Maße, da sie sich durch eine kompakte Bauweise, ein vergleichsweise geringes Eigengewicht sowie eine relativ geringe Wärmeentwicklung auszeichnet, was sich besonders vorteilhaft auf die Meßgenauigkeit der Vorrichtung auswirkt.

Bei einer Ausführungsform, wobei die Meßvorrichtung eine Anschlußwelle für den zu überprüfenden Motor aufweist, an welcher der mindestens eine Rotor drehfest gehalten und um welche der Spulenkörper mit Spulenanordnung konzentrisch angeordnet und unter Betätigung eines Meßaufnehmers mittels eines mit dem Spulenkörper verbundenen Hebelarmes verdrehbar ausgebildet ist, ist es vorgesehen, daß der Spulenkörper mit Spulenanordnung mittels eine Drehbewegung zur Betätigung des Meßaufnehmers zulassenden federelastischen Elementen gehalten ist. Im Gegensatz zu den bekannten Leistungsprüfständen mit Wirbelstrombremsen, bei welchen der Spulenkörper mit Magnetspulen frei auf der Welle gelagert ist, kann durch die erfindungsgemäße Ausbildung der Wirbelstrombremse mit federelastischen Elementen zu ihrer Verankerung auf Lager zwischen Spulenkörper und Anschlußwelle verzichtet werden. Eine Verschmutzungsgefahr durch Austreten des Schmiermittels der Lager besteht daher nicht. Bei einfachem Aufbau ergibt sich durch das Entfallen der Lager eine erhöhte thermische Dauerfestigkeit bei gleichzeitig geringer Störanfälligkeit und höherer Drehzahlgrenze. Dabei liegt die biegekritische Drehzahlgrenze der federelastischen Elemente weit über der Drehzahlgrenze der bei den bekannten Meßeinrichtungen eingesetzten Lager für den Spulenkörper mit Magnetspulen auf der Anschlußwelle.

Nach einer vorteilhaften Ausführungsform der Erfindung sind die federelastischen Elemente als an dem Grundgestell bzw. dem Rahmen der Vorrichtung angeordnete Blattfedern ausgebildet. Durch die Abstützung des Spulenkörpers mit Spulenanordnung mittels der Blattfedern an dem Rahmen der Prüfbank o. dgl. ergibt sich ein stabiles und vibrationsarmes Meßsystem.

Selbstverständlich kann die Wirbelstrombremse nach der Erfindung auch als Zusatzbremseinrichtung für Kraftfahrzeuge, insbesondere für Lastkraftwagen und Omnibusse, ausgebildet sein, wobei der mindestens eine Rotor drehfest mit dem Antriebswellenstrang des Fahrzeuges verbunden ist und die Spulenanordnung mit Spulenkörper koaxial zum Antriebswellenstrang ortsfest an dem Kraftfahrzeug gehalten ist.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

Figur 1 einen Längsschnitt einer möglichen Ausführungsform einer erfindungsgemäßen Wirbelstrombremse,

Figur 2 einen Querschnitt der Wirbelstrombremse längs der Linie II-II gemäß Figur 1,

Figur 3 eine perspektivische Teilansicht des Rotors der Wirbelstrombremse gemäß Figur 1,

Figur 4 eine schematische Darstellung des Verlaufs der von der Erregerspulenanordnung ausgehenden magnetischen Feldlinien,

Figur 5 den Längsschnitt einer Vorrichtung zur Messung der Nutzleistung von Motoren mit einer Wirbelstrombremse gemäß Figur 1,

Figur 6 eine Draufsicht auf die Meßvorrichtung gemäß Figur 5, teilweise geschnitten und

Figur 7 einen Querschnitt der Vorrichtung gemäß Figur 5.

Die Wirbelstrombremse 1 gemäß den Figuren weist einen Spulenkörper 2 auf, an welchem eine Spulenanordnung 3 gehalten ist. Der Spulenkörper 2 besteht aus zwei konzentrischen Ringen 10 und 11, zwischen welchen bei dem hier gewählten Ausführungsbeispiel eine zylindrische Magnetspule 12 festgeklemmt ist. Die Stirnseiten der Ringe 10, 11 sind als Pole 6 bis 9 ausgebildet, welche bei Erregung der Magnetspule 12 auf jeder Stirnseite der Ringe 10, 11 einen Nord- und einen Südpol des Magnetsystems festlegen.

Die beiden Ringe 10 und 11 des Spulenkörpers 2 bestehen aus magnetisch weichem Material, wie bspw. Eisen, und sind mittels (nicht dargestellten) Schraubverbindungen aus nichtmagnetischem Werkstoff miteinander verbunden. Zusätzlich ist der innere Ring 10 in Längsrichtung geteilt ausgeführt, um die Magnetspule 12 in einfacher Weise festklammern zu können.

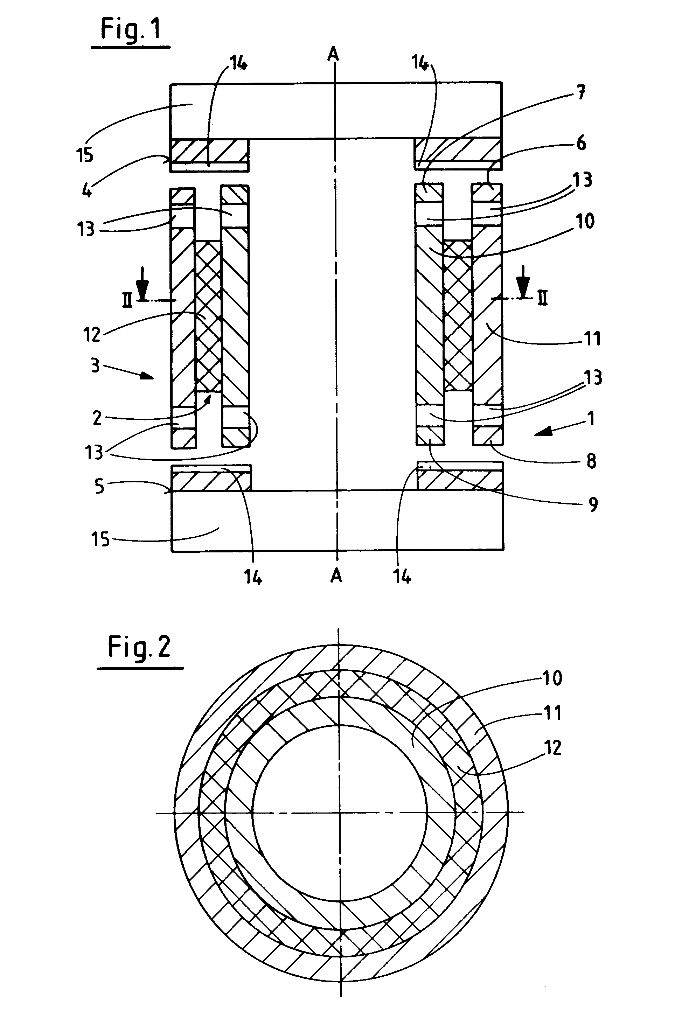

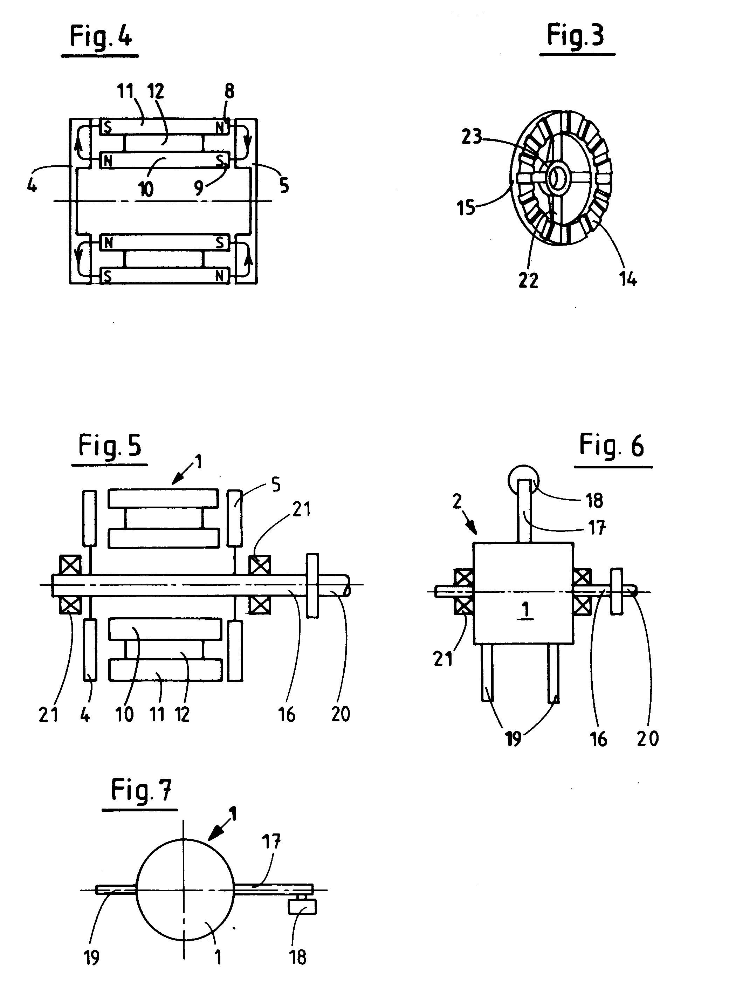

Mit geringem Abstand zu den Polen 6 bis 9 befindet sich auf jeder Stirnseite der Spulenordnung 3 ein Rotor 4 und 5. Wie insbesondere aus Figur 3 zu entnehmen, weisen die Rotoren 4, 5 jeweils ein im Bereich der Stirnseite der Spulenanordnung 3 zu liegen kommendes radial äußeres Ringelement 15 auf, welches mittels Armen 22 von einem mittleren Platten- oder Nabenteil 23 gehalten ist. Das Platten- oder Nabenteil 23 ist mit einer den Spulenkörper 2 mit Spulenanordnung 3 in axialer Richtung durchsetzenden und in den Figuren 1 bis 4 mit der Rotorachse A-A zusammenfallenden Anschlußwelle 16 befestigbar. Auf seiner den ringförmigen Polen 6 bis 9 zugewandten Seite ist das Ringelement 15 jedes Rotors 4, 5 mit Zähnen 14 versehen. Dabei können die radial nach außen verlaufenden Zähne auch eine andere geometrische Ausgestaltung erfahren als in Figur 3 dargestellt, indem bspw. die Stirnflächen der Zähne 14 einen i. w. rechteckförmigen Querschnitt aufweisen und die sich durch die Zähne 14 am Ringelement 15 der Rotoren 4, 5 ergebenden Vertiefungen Ringsegmente bilden.

In Betrieb der Wirbelstrombremse 1 fließt durch die Magnetspule 12 ein Gleichstrom. Je nach eingestelltem Erregerstrom bildet sich ein entsprechend homogenes Magnetfeld aus, dessen Feldlinien senkrecht zu den Zahnflächen der Zähne 14 an dem Ringelement 15 des entsprechenden Rotors 4 und 5 verlaufen. Aufgrund der Drehbewegung des Rotors 4, 5 durch das magnetische Induktionsfeld entstehen als Folge der rotierenden Zähne 14 im Bereich der Stirnseiten der ringförmigen Pole 6 bis 9 bzw. an den Stirnseiten des durch den Spulenkörper 2 mit Spulenanordnung 3 und Ringen 10 und 11 gebildeten Stators Wirbelströme, die ihrerseits Magnetfelder aufbauen. Diese Magnetfelder wirken ihrer Ursache, nämlich der Drehbewegung des Rotors 4 und 5, entgegen. Bei festgehaltenem Stator wird hierdurch die Drehbewegung der Rotoren 4 und 5 gebremst und bspw. ein an die Anschlußwelle 16 angeschlossener Motor belastet. Durch die konstante Magnetisierung der Rotoren 4, 5 treten keine Ummagnetisierungsverluste auf, so daß sich eine hohe Ausnutzung der elektrischen Energie für die Felderzeugung in die die Bremsleistung bewirkenden Wirbelströme ergibt. Auch ist die Wärmeentwicklung gegenüber den bekannten Wirbelstrombremsen aufgrund des geringeren Ohmschen Widerstandes sehr viel kleiner und die Temperaturverteilung über die Rotoren 4, 5 wesentlich gleichmäßiger. Darüber hinaus resultiert aus der relativ geringen thermischen Belastung der Rotoren 4, 5, zusätzlich noch unterstützt durch gleichmäßige Temperaturverteilung, daß die Verformungen der Rotoren 4, 5 und damit die Änderungen des Luftspaltes zwischen den Polen 6 bis 9 und den Rotoren 4, 5 wesentlich geringer als bei den bekannten Wirbelstrombremsen sind, was eine definierte Einstellung der Bremswirkung erlaubt. Aufgrund der relativ geringen Wärmebelastung können die Rotoren zudem in Leichtbauweise hergestellt werden, indem die Arme 22 mit Nabenteil 23 aus Leichtmetall und die Zähne 14, ggf. mit äußerem Ringelement 15 aus weichmagnetischem Werstoff bestehen.

Zur Abführung der enstehenden Wärme können, wie aus Figur 1 zu ersehen, die beiden Ringe 10 und 11 zusätzlich mit Kühlöffnungen 13 versehen sowie die Arme 22 der Rotoren 4, 5 als Lüftungsflügel ausgebildet sein. Als weitere Maßnahmen zur Abführung der, insbesondere an den Statorstirnflächen durch die Wirbelströme auftretenden Wärme können in die Rotoren 4, 5 elektrische Lüfter integriert sein, wie auch an den Polen 6 bis 9 zusätzliche (nicht dargestellte) Kühlrippen vorgesehen sein können. In dieser Ausführung läßt sich die Wirbelstrombremse 1 bspw. in Kraftfahrzeugen, insbesondere Lastkraftwagen und Omnibussen, als Zusatzbremseinrichtung in den Antriebswellenstrang einbauen.

Die Figuren 5 bis 7 zeigen den Einsatz dieser Wirbelstrombremse 1 bei einem Leistungsprüfstand für Motoren. Wie insbesondere aus Figuren 5 und 6 zu ersehen, weist die Meßvorrichtung eine Anschlußwelle 16 für die Motorwelle 20 auf. Konzentrisch zur Anschlußwelle 16 befindet sich der die Magnetspule 12 zwischen seinen beiden Ringen 10 und 11 aufnehmende Spulenkörper 12, welcher, wie insbesondere aus Figur 6 zu entnehmen, mittels Blattfedern 19 am Rahmen der Vorrichtung gehalten ist. Mit geringem Abstand vor den von den Ringen 10, 11 gebildeten Polen 6 bis 9 befinden sich die mit einer Zahnung versehenen Rotoren 4, 5, welche drehfest mit der Anschlußwelle 16 verbunden sind. Die Anschlußwelle 16 ist lediglich außerhalb der Wirbelstrombremse 1 mittels Lagern 21 an dem Rahmen gehalten.

Wie weiterhin aus Figur 6 zu entnehmen, ist am Spulenkörper 2 ein radial nach außen weisender Hebelarm 17 befestigt, welcher zur Ermittlung der von dem Spulenkörper 2 über den Hebelarm 17 ausgeübten Kraft F mit einem Meßaufnehmer 18 zusammenwirkt.

Zur Messung seiner Nutzleistung wird der (nicht dargestellte) Motor mit seiner Motorwelle 20 an die Anschlußwelle 16 angeschlossen und in Gang gesetzt, wodurch die Rotoren 4, 5 vor den Polen 6 bis 9 des Spulenkörpers 2 mit Spulenanordnung 3 drehen. Bei Erregung der Magnetspule 12 ergibt sich durch die Wechselwirkung des induzierten Magnetfeldes eine anfängliche Drehbewegung des Spulenkörpers 2 in Drehrichtung der beiden Rotoren 4, 5, bis der Hebelarm 17 an dem gestellseitig angeordneten Meßaufnehmer 18 anliegt. Aufgrund der rotierenden Zähne 14 an den Rotoren 4, 5 in den Magnetfeldern der Spulenanordnung 3 werden an den Stirnseiten des Stators Wirbelströme aufgebaut, wodurch in die Anschlußwelle 16 ein Bremsmoment eingeleitet und der Motor belastet wird. Dabei wird auf den Spulenkörper 2 mit Spulenanordnung 3 ein dem Antriebsmoment des Motors entgegengesetzes Drehmoment $D = F \times I$ ausgeübt. Die Größe der Kraft F wird mittels des Meßaufnehmers 18 gemessen, wobei die Länge I des Hebelarms 17 durch den Abstand zwischen der Achse der Anschlußwelle 16 und dem Anlagepunkt des Hebelarms 17 am Meßaufnehmer 18 vorgegeben ist. Die in die Formel für die Leistung eines rotierenden Körpers mit $P = D \times \omega$ noch eingehende Winkelgeschwindigkeit der Anschlußwelle 16 mit $\omega = 2\pi\nu$, wobei $\nu$ die Drehzahl bedeutet, läßt sich mit Hilfe eines (nicht dargestellten) Drehzahlmessers ermitteln.

Da der Spulenkörper 2 mittels der Blattfedern 19 am Rahmen der Meßvorrichtung abgestützt ist, ergibt sich ein stabiles und vibrationsarmes Meßsystem. Durch diese Art der Verankerung des Spulenkörpers 2 mittels Blattfedern 19 an dem Rahmen der Meßvorrichtung entfallen die bei den bekannten Meßvorrichtungen vorgesehenen Lager des Spulenkörpers 2 an der Anschlußwelle 16, so daß bei höherer thermischer Dauerfestigkeit und geringer Störanfälligkeit höherer Drehzahlgrenzen erreicht sind.

Bezugszeichenliste

| | | |
|---|---|---|
| 1 - | | Wirbelstrombremse |
| 2 - | | Spulenkörper |
| 3 - | | Spulenanordnung |
| 4 - | | Rotor |

| | |
|---|---|
| 5 - | Rotor |
| 6 - | Pol |
| 7 - | Pol |
| 8 - | Pol |
| 9 - | Pol |
| 10 - | Ring |
| 11 - | Ring |
| 12 - | Magnetspule |
| 13 - | Kühlöffnungen |
| 14 - | Zähne |
| 15 - | Ringelement |
| 16 - | Anschlußwelle |
| 17 - | Hebelarm |
| 18 - | Meßaufnehmer |
| 19 - | Blattfedern |
| 20 - | Motorwelle |
| 21 - | Lager |
| 22 - | Arme |
| 23 - | Nabenteil |
| A-A : | Rotorachse |

## Patentansprüche

1. Wirbelstrombremse mit mindestens einem im Magnetfeld einer an einem Spulenkörper (2) gehaltenen Spulenanordnung (3) drehenden Rotor (4), dadurch gekennzeichnet, daß der Spulenkörper (3) zwei i. w. konzentrisch zur Rotorachse (A-A) und mit radialem Abstand zueinander angeordnete ringförmige Pole (6, 7) mit entgegengesetzter Feldrichtung aufweist und daß der Rotor (4) auf seiner den ringförmigen Polen (6, 7) zugewandten Seite mit radial verlaufenden Rippen, Zähnen o. dgl. Vorsprüngen versehen ist.

2. Wirbelstrombremse nach Anspruch 1, dadurch gekennzeichnet, daß der Spulenkörper (2) zwei konzentrische Ringe (10, 11) aufweist, welche unter Bildung des mindestens einen Polpaares (6, 7) die Spulenanordnung (3) zwischen sich aufnehmen.

3. Wirbelstrombremse nach Anspruch 2, dadurch gekennzeichnet, daß an beiden Stirnseiten der Ringe (10, 11) jeweils ein Polpaar (6, 7; 8, 9) mit zugeordnetem Rotor (4, 5) gebildet ist.

4. Wirbelstrombremse nach einem der Ansprüche 1 bis 3, dadurch gekennzeichnet, daß der Spulenkörper (2) bzw. seine Ringe (10, 11) aus magnetisch weichem Material, bspw. Eisen, besteht/bestehen.

5. Wirbelstrombremse nach einem der Ansprüche 1 bis 4, dadurch gekennzeichnet, daß die Spulenanordnung (3) mindestens eine zylindrische Magnetspule (12) aufweist.

6. Wirbelstrombremse nach einem der Ansprüche 1 bis 5, dadurch gekennzeichnet, daß die ringförmigen Pole (6, 7) in axialer Richtung gegenüber der Spulenanordnung (3) vorstehen.

7. Wirbelstrombremse nach einem der Ansprüche 2 bis 6, dadurch gekennzeichnet, daß der radial innere Ring (10) in Längsrichtung geteilt ausgebildet ist.

8. Wirbelstrombremse nach einem der Ansprüche 2 bis 7, dadurch gekennzeichnet, daß die Ringe (10, 11) mittels Schraubverbindungen aus nichtmagnetischem Werkstoff zusammengehalten sind.

9. Wirbelstrombremse nach einem der Ansprüche 2 bis 8, dadurch gekennzeichnet, daß die Ringe (10, 11) mit Kühlöffnungen (13), Kühlrippen o. dgl. Einrichtungen versehen sind.

10. Wirbelstrombremse nach einem der Ansprüche 1 bis 9, dadurch gekennzeichnet, daß die den ringförmigen Polen (6, 7) zugewandten Rippen, Zähne (14) o. dgl. Vorsprünge des mindestens einen Rotors (4, 5) an einem radial äußeren Ringelement (15) gebildet sind, welches mittels, als Ventilationsflügel ausgebildeten Armen (22) von einem mittleren Platten- oder Nabenteil gehalten ist, das mit einer aus der Spulenanordnung (3) austretenden Anschlußwelle (16) befestigbar ist.

11. Wirbelstrombremse nach einem der Ansprüche 1 bis 10, dadurch gekennzeichnet, daß zwischen dem die Rippen, Zähne (14) o. dgl. Vorsprünge aufweisenden Ringelement (15) und dem mit der Anschlußwelle (16) befestigbaren Platten- oder Nabenteil (23) eine, vorzugsweise elektrische Gebläseeinrichtung vorgesehen ist.

12. Wirbelstrombremse nach einem der Ansprüche 1 bis 11, dadurch gekennzeichnet, daß der mindestens eine Rotor (4, 5) aus Leichtmetall und/oder die Rippen, Zähne (14) o. dgl. Vorsprünge, ggf. mit dem äußeren Ringelement (15) aus einem magnetischen, vorzugsweise einem weichmagnetischen Werkstoff bestehen.

13. Wirbelstrombremse nach einem der Ansprüche 1 bis 12, dadurch gekennzeichnet, daß sie als Bremselement einer Vorrichtung zur Messung des Drehmomentes bzw. der Leistung von Motoren ausgebildet ist.

14. Wirbelstrombremse nach Anspruch 13, wobei die Meßvorrichtung eine Anschlußwelle (16) für den zu überprüfenden Motor aufweist, an welcher der mindestens eine Rotor (4, 5) drehfest gehalten, um welche der Spulenkörper (2) mit Spulenanordnung (3) konzentrisch angeordnet und unter Betätigung eines Meßaufnehmers (18) mittels eines mit dem Spulenkörper (2) verbundenen Hebelarmes (17) verdrehbar ausgebildet ist, dadurch gekennzeichnet, daß der Spulenkörper (2) mit Spulenanordnung (3) mittels eine Drehbewegung zur Betätigung des Meßaufnehmers (18) zulassenden federelastischen Elementen gehalten ist.

15. Wirbelstrombremse nach Anspruch 14, dadurch gekennzeichnet, daß die federelastischen Elemente als an dem Grundgestell bzw. Rahmen der Vorrichtung angeordnete Blattfedern (19) ausgebildet sind.

16. Wirbelstrombremse nach einem der Ansprüche 1 bis 12, dadurch gekennzeichnet, daß sie als Zusatzbremseinrichtung für Kraftfahrzeuge, insbesondere für Lastkraftwagen und Omnibusse, ausgebildet ist, wobei der mindestens eine Rotor (4, 5) drehfest mit dem Antriebswellenstrang des Fahrzeuges verbunden ist und die Spulenanordnung (3) mit Spulenkörper (2) koaxial zum Antriebswellenstrang ortsfest an dem Kraftfahrzeug gehalten ist.

## Fig.1

## Fig.2

## Fig. 4

## Fig. 3

## Fig. 5

## Fig. 6

## Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 454 516   (SOCIETE INDUSTRIELLE DE MATERIE-LELECTROMAGNETIQUE) | 1-3,5 | H 02 K 49/04 |
| Y | (* Seite 3, Zeile 39 - Zeile 45; Abbildung 7 *) | 9,13,14, 16 | |
| | – – – | | |
| Y | DE-A-2 650 147   (FROUDE ENGINEERING LTD.) * Seite 10, Zeile 8 - Zeile 16; Abbildung 1 * * | 9 | |
| | – – – | | |
| Y | US-A-4 457 182   (R.A.MC FARLAND) * Spalte 2, Zeile 47 - Zeile 51; Abbildung 3 * * | 13,14 | |
| | – – – | | |
| Y | FR-A-1 507 286   (SOCIETE INDUSTRIELLE DE MATERIE-LELECTROMAGNETIQUE) * Seite 1, Zeile 1 - Zeile 4 * * | 16 | |
| | – – – | | |
| A | US-A-2 836 742   (P.E.BESSIERE) * Spalte 3, Zeile 36 - Zeile 43; Abbildung 2 * * | 11 | |
| | – – – | | |
| D,A | DE-U-9 000 789   (H.H.H.EGGERS) – – – – – | | |

**RECHERCHIERTE SACHGEBIETE (Int. Cl.5)**

H 02 K
G 01 L

Der vorliegende Recherchenbericht wurde für alle Patentansprüche erstellt

| Recherchenort | Abschlußdatum der Recherche | Prüfer |
|---|---|---|
| Berlin | 21 Januar 92 | LEOUFFRE M. |